# EUROPEAN PATENT APPLICATION

(11) **EP 2 124 398 A1**
(43) Date of publication of application: **25.11.2009**
(21) Application number: 07855712.1
(22) Date of filing: 19.12.2007
(51) Int. Cl.: H04L 12/56

(54) **A METHOD AND SYSTEM FOR CONTROLLING NETWORK ACCESS**

(30) Priority: 06.03.2007 CN 200710086705
(71) Applicant: ZTE Corporation, Shenzhen, Guangdong 518057 (CN)
(72) Inventor: MIAO, Wei, Shenzhen Guangdong 508057 (CN); LIAO, Deqiang, Shenzhen Guangdong 508057 (CN); ZHOU, Yanjian, Shenzhen Guangdong 518057 (CN)
(74) Representative: Vossius & Partner
(86) International application number: PCT/CN2007/003675
(87) International publication number: WO 2008/106850

(57) **Abstract**

A method and system for controlling network access are provided. The method comprises following steps: S102, gateway equipment establishes a general network connection to network management equipment; S104, the gateway equipment receives from the network management equipment the parameter information of the service type applied by the gateway equipment, and based on the parameter information, the gateway equipment establishes a network connection which is leading to the network management equipment and matched to the service type applied by the gateway equipment on the basis of the general network connection; and S106, the gateway equipment controls to select the general network connection or the network connection matched to the service type applied by the gateway equipment based on the user type, so as to carry out the network access control, The present invention realizes the network access control, and at same time solves the problem that multiple users log on the network.

## Description

### Field of the Invention

The present invention relates to communication field, in particular to a method and system for controlling network access.

### Background of the Invention

With the development of internet, the contents provided by internet are explosively increased. Internet provides all kinds of information for people, and becomes the necessary element in the life, work and entertainment of people. However everything has it's two blades. Internet, providing knowledge in various aspects, provides healthy knowledge and timely information which do help and greatly benefit people and at the same time, has violence and obscene contents which impact the normal life of people, and even make teenagers go astray. A question is whether it is possible to design a system to control the internet contents that users can reach, so as to have people just receive the healthy information. The answer is positive. At present, a green internet service has been established in the field. The service monitors the internet behaviors of users by using the access equipment of operator, and provides two accounts (normal internet account and green internet account) for the users. When parent log on network, the normal account is used, and when a child logs on network, the green account is used. The internet contents accessed by the green account is monitored by the service provider on the access equipment side, and once restricted content is found accessed by the user, the R-rated internet content will be restricted to be accessed immediately through the method of illegal packet attack. Though the service can solve the issue of filtering the internet contents, the service has many problems in use, because of mechanism defects, such as, the method can not solve the problems when a plurality of family members log on network at the same time, and the parent and child can not access the internet at the same time.

To solve the problems, the present invention provides a novel green internet service mode in which based on the existing green internet, the user identification is carried out by using gateway equipment and a plurality of dial interfaces are used by a tragedy route method to completely solve the problem that multiple users need to log on network at the same time.

### Summary of the Present Invention

The present invention is directed to provide a method and system for controlling network access to achieve the management for user internet behavior.

The method for controlling network access includes following steps: S102, gateway equipment establishes a general network connection to network management equipment; S104, the gateway equipment receives from the network management equipment the parameter information about service type applied by the gateway equipment, and establishes a network connection which is leading to the network management equipment and matched to the service type applied by the gateway equipment, on the basis of the general network connection and according to the parameter information; and S106, the gateway equipment, based of the user type, controls to select the general network connection or the network connection matched to the service type applied by the gateway equipment, so as to carry out network access control.

Meanwhile, Step S104 includes: S1042, the gateway equipment receives from the network management equipment the parameter information of service type applied by the gateway equipment; S1044, the gateway equipment obtains from the parameter information the connection parameters of the network connection matched to serviced type applied by the gateway equipment and network access control parameters; and S1046, the gateway equipment establishes the network connection matched to the service type applied by the gateway equipment, at the basis of the general network connection and according to the connection parameters.

Meanwhile, Step S106 includes the following steps: S1062, the gateway equipment identifies the user type depending on the user information; S1064, the gateway equipment, based on the user type, selects the general network connection or the network connection matched to the service type applied by the gateway equipment; and S1066, the gateway equipment carries out network access control through the network access control parameters of the network connection matched to the service type applied by the gateway equipment.

Meanwhile, the user type comprises at least one of the following two types: general user and network assess restriction user. The general network connection and the network connection matched to the service type applied by the gateway equipment both are dial-typed network connection. The gateway equipment identifies user type just once in the process of the network connection.

The system for controlling network access according to the present invention comprises: a first network connection equipment for establishing a general network connection from gateway equipment to network management equipment; a second network connection equipment for receiving from the network management equipment the parameter information of the service type applied by the gateway equipment, and establishing the network connection which is leading to the network management equipment and matched to the service type applied by the gateway equipment, at the basis of the general network connection and according to the parameter information; and a network access control equipment for controlling to select the general network connection or the network connection matched to the service type applied by the gateway equipment based on the user type, so as to carry out the network access control.

Meanwhile, the second network connection equipment comprises: an information receiving device for receiving from the network management equipment the parameter information of the service type applied by the gateway equipment; a parameter obtaining device for obtaining from the parameter information the connection parameters of the network connection matched to the serviced type applied by the gateway equipment and the network access control parameters; and a network connection device for establishing the network connection matched to the service type applied by the gateway equipment, at the basis of the general network connection and according to the connection parameters.

Meanwhile, the network access control device comprises: a type identification device for identifying user type depending on user information; a connection selection device for selecting based on the user type the general network connection or the network connection matched to the service type applied by the gateway equipment; an access control device for carrying out network access control through the network access control parameter of the network connection matched to the service type applied by the gateway equipment.

Meanwhile, the user type comprises at least one of the following two types: general user and network assess restriction user. The general network connection and the network connection matched to the service type applied by the gateway equipment both are dial-typed network connection. The network access control system identifies user type just once during the process of network connection.

The present invention can fully utilize the existing network equipment of authority party and service provider party, saves new business investments, and at the same time can solves the problem that multiple users need to log on network at the same time (for example, parent and child can access the internet at the same time).

### Brief Description of the Drawings

The drawings in the specification provide a further understanding of the present invention and constitute a part of the application. The exemplary embodiments of the present invention and the explanation thereof are given thereafter by way of illustration only, and thus are not limitative of the present invention, wherein:
Fig.1a to Fig.1c is a flowchart of the method for controlling network access and the steps thereof according to the embodiments of the present invention;
Fig.2 is a block diagram of the system for controlling network access which is used for realizing the method for controlling network access and the steps thereof shown in Fig.1a to Fig.1c;
Fig.3 is a flowchart schematic view of the method for controlling network access according to another embodiment of the present invention;
Fig.4 is a block diagram of the system for controlling network access which is used for realizing the method for controlling network access shown in Fig.3; and
Fig.5 is a detailed block diagram of the household gateway equipment in the system for controlling network access shown in Fig.4.

### Detailed Description

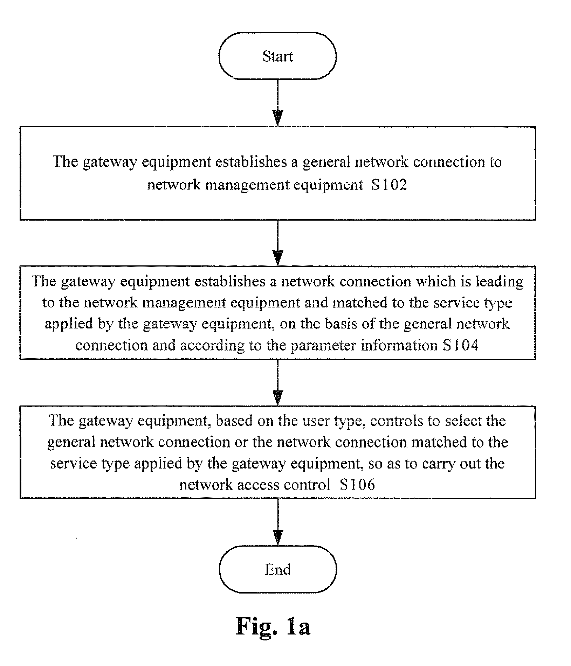

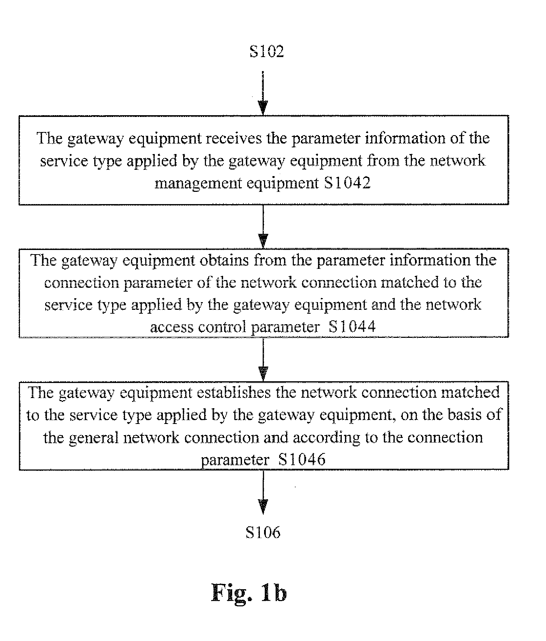

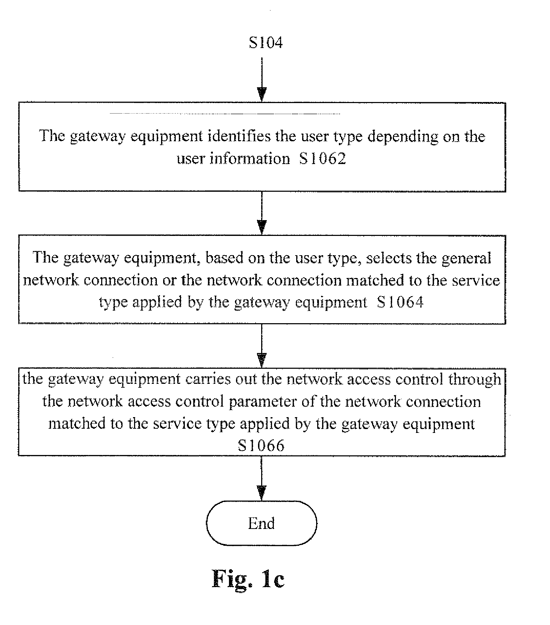

The present invention will be detailed in connection with the embodiments thereof and reference will be made to Fig.1a. As shewn in Fig.1, the method for controlling network access includes the following steps: S102, a gateway equipment establishes a general network connection to a network management equipment; S104, the gateway equipment receives from the network management equipment the parameter information of the service type applied by the gateway equipment, and the gateway equipment establishes the network connection which is leading to the network management equipment and matched to the service type applied by the gateway equipment, on the basis of the general network connection and according to the parameter information,; and S106, the gateway equipment based on the user type controls to select the general network connection or the network connection matched to the service type applied by the gateway equipment, so as to carry out network access control.

Meanwhile, as shown in Fig.1b, Step S104 comprises: S1042, the gateway equipment receives from the network management equipment the parameter information of the service type applied by the gateway equipment; S1044, the gateway equipment obtains from the parameter information the connection parameter of the network connection matched to the serviced type applied by the gateway equipment and the network access control parameter; and S1046, the gateway equipment establishes the network connection matched to the service type applied by the gateway equipment, on the basis of the general network connection and according to the connection parameter.

Meanwhile, as shown in Fig.1c, Step S106 comprises the following steps: S1062, the gateway equipment identifies the user type depending on the user information; S1064, the gateway equipment based on the user type selects the general network connection or the network connection matched to the service type applied by the gateway equipment; and S1066, the gateway equipment carries out the network access control through the network access control parameter of the network connection matched to the service type applied by the gateway equipment.

Meanwhile, the user type comprises at least one of the following two types: general user and network assess restriction user. The general network connection and the network connection matched to the service type applied by the gateway equipment both are dial-typed network connection. The gateway equipment identifies user type just once during the process of network connection.

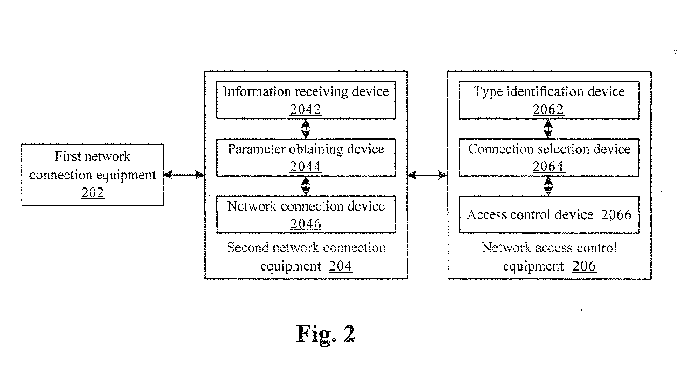

The system for controlling network access which is used for realizing the method for controlling network access and the steps thereof shown in Fig.1a to Fig.1c will be detailed and reference will be made to Fig.2. As shown in Fig.2, the system for controlling network access comprises: a first network connection equipment 202 for establishing a general network connection from the gateway equipment to the network management equipment; a second network connection equipment 204 for receiving from the network management equipment the parameter information of the service type applied by the gateway equipment, and establishing the network connection which is leading to the network management equipment and matched to the service type applied by the gateway equipment, on the basis of the general network connection and according to the parameter information; and a network access control equipment 206 for controlling to select the general network connection or the network connection matched to the service type applied by the gateway equipment based on the user type, so as to carry out the network access control.

Meanwhile, the second network connection equipment 204 comprises: an information receiving device 2042 for receiving from the network management equipment the parameter information of the service type applied by the gateway equipment; a parameter obtaining device 2044 for obtaining from the parameter information the connection parameter of the network connection matched to the service type applied by the gateway equipment and the network access control parameter; and a network connection device 2046 for establishing the network connection matched to the service type applied by the gateway equipment, on the basis of the general network connection and according to the connection parameter.

Meanwhile, the network access control device 206 comprises: a type identification device 2062 for identifying user type depending on user information; a connection selection device 2064 for selecting based on the user type the general network connection or the network connection matched to the service type applied by the gateway equipment; an access control device 2066 for carrying out the network access control through the network access control parameter of the network connection matched to the service type applied by the gateway equipment.

Meanwhile, the user type comprises at least one of the following two types: general user and network assess restriction user. The general network connection and the network connection matched to the service type applied by the gateway equipment both are dial-typed network connection. The network access control system identifies user type just once during the process of network connection.

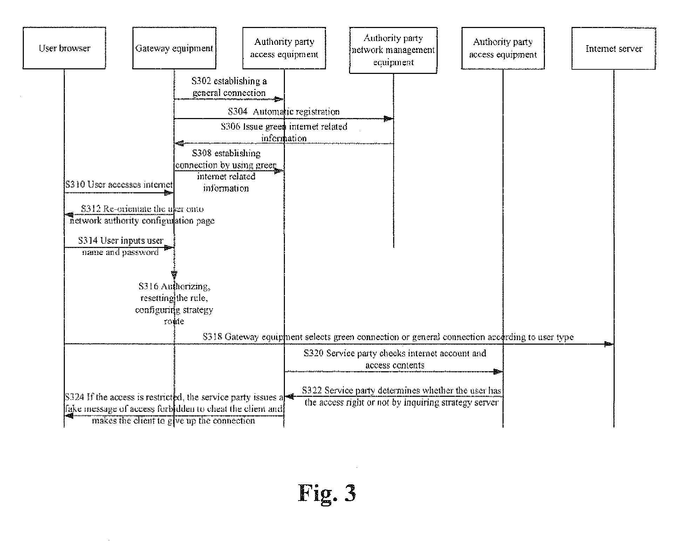

Another embodiment of the method for controlling network access according to the present invention will be detailed and reference will be made to Fig.3. As shown in Fig.3, the network access control service requires the user launch the service through the authority party, and it is needed the network management equipment of the authority party, the service equipment and gateway equipment to cooperate to realize the entire network access control flow. The following is the description of the whole service flow, starting with the user launching the service. As shown in Fig.3, the flow comprises the following steps:
S302, the user powers the household gateway equipment and dials using the general account provided by the authority party to establish a general connection;
S304, gateway equipment automatically registers on the network management equipment of the authority party based on the network management configuration information stored on the gateway equipment;
S306, after the registration authorization for the gateway, the network management equipment inquires the service applied by the gateway equipment and finds green internet service, and at this point, the network management equipment automatically pushes the parameter information of the green internet (such as green internet account, user name and password) to the household gateway equipment;
S308, after receiving such information, the gateway equipment immediately dials using the green internet account contained in said information; at the same time, the user management module in the household gateway equipment establishes a user account based on the user information contained in said information; green internet management module establishes user network filter strategy based on said information and configures on the network layer of the gateway a filter rule that the content can not pass through when defaults;
S310, the user starts to access the internet, and then the terminal of the user browser issues Http message;
S312, after receiving the message, the household gateway equipment, due to the inability of determining what user type issued the message, firstly discards the message, and then returns the message of Http re-orientation, and re-orientates the user browser onto the user authority configuration page of the gateway equipment;
S314, following the suggestion on the user authority configuration page, the user inputs the user name and password, and then the user management module of the gateway equipment will carry out authorization operation for the information;
S316, after the authorization is passed, the user management module obtains through the message the information of IP or MAC address of the user terminal and so on which are bound with the user name, and the user management module informs IP or MAC information contents together to the green internet management module which will establish the user strategy on the corresponding IP and MAC address according to the binding relationship between IP/MAC information and the user, and at the same time, gateway strategy route module generates strategy route rule based on IP/MAC address information;
S318, when the user accesses internet again and the message enters the network layer of the gateway equipment, the message firstly enters the route processing section to carry out route selection operation wherein because of the strategy route information configured in Step S216, the message automatically selects the desired Wan interface (general interface or green internet interface), after which the message enters the filter section of green internet control and herein because the network layer of the gateway equipment has established new rules based on the IP/MAC of the user, the network layer of the gateway no longer forcedly returns the message of re-orientating Http, but allows the Http message of the user smoothly passing through the network layer, and at last the message enters the corresponding Wan connection module to be sent out;
S320, the message passes through the access equipment of the authority party, and the service provider party obtains the user message and fetches the accessing contents of the message which are bound with the information of the source address, dial account and so on of the message to be transmitted to the strategy server of the service provider party;
S322, the strategy server, according to the user information and the contents of the message, determines whether the message is within the access authority scope of the user where if the access does not exceed the authority, no measure is taken; while if the access exceeds the authority, the Step S324 is executed at once;
S324, after it is determined that the user access exceeds the authority, the service provider party transmits to the gateway a cheat message of TCP suspension connection on the access equipment side, and after the user browser receives such cheat message, the user browser, considering the connection as interruption, no longer performs normally, and therefore the entire network access control flow is realized.

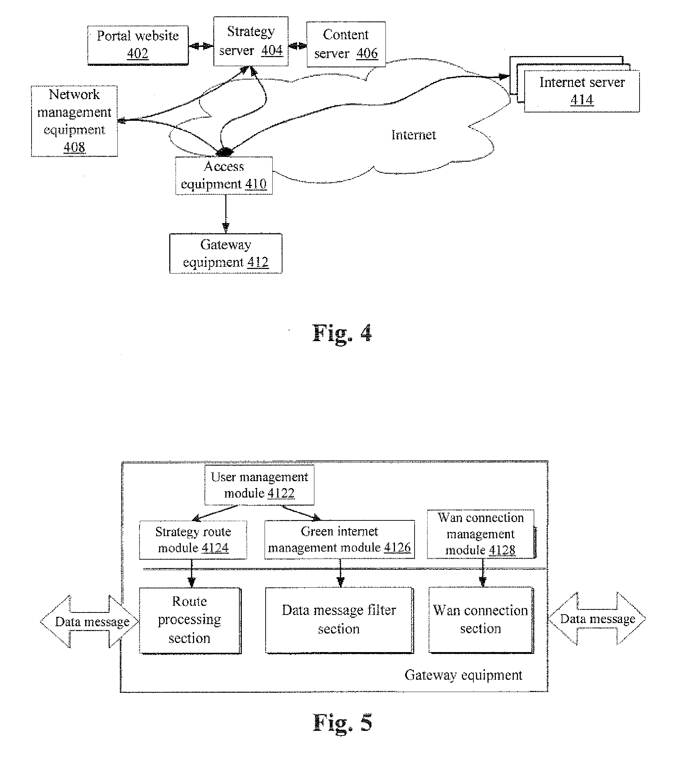

The network access control system for realizing the method for controlling network access shown in Fig.3 will be detailed and reference will be made to Fig.4 and Fig.5. As shown in Fig.4. the network access control system mainly comprises a green internet portal website 402, a strategy server 404, a content server 406, a network management equipment 408, an access equipment 410, a household gateway equipment 412, an internet server 414 and so on.

The green internet portal website 402 is provided by the service provider party for the user to set the network filter strategy.

The content server 406 provides the hierarchical information of URL address on the internet for the inquiry of the strategy server to determine the message type.

The network management equipment 408 is the general name of service management and receiving equipment of the authority party, concretely comprising a plurality of parts (such as foreground equipment, 97 system, Access Control server (ACS) and so on). The network management equipment is used for launching services for the user, and transmitting the user information to the service provider party and the household gateway equipment.

The access equipment 410 is also the general name of the equipments on the access terminal of the authority party (service party), comprising DSL Access Multiplexer (Dslam), Broadband Remote Access Server (BRAS), exchanger, image exchanger and so on. The main functions of the access equipment comprise: establishing the dial connection of the user; imaging the message transmitted by the user; extracting the key information in the message (such as the message access URL address, message IP, the corresponding user information and so on); communicating with the back strategy server; analyzing and determining whether the user has the access right or not; transmitting a fake message of access forbidden and so on.

The multiple user function in the green internet service is realized mainly depending on the household gateway equipment 412. The gateway realizes the operations of user authorization, user route selection and user access content filter and so on.

Meanwhile, as shown in Fig.5, the gateway equipment 412 for realizing the functions of user right authorization, message dynamic route and so on comprises a user management module 4122, a strategy route module 4124, a green internet module 4126, an Wan connection module 4128 and so on. The flow of the gateway equipment realizing the functions of user right authorization, message dynamic route and so on is as follows: the user applies for the green internet service through the authority party, and after the service is launched, the network management equipment of authority party automatically pushes the service parameter information to the user gateway equipment; the Wan connection module of the gateway equipment establishes green internet dial connection according to the green internet parameter information, and on the basis of the built general Wan connection; the user management module according to the user information of said information establishes the green internet user, such as parent, child and so on; the green internet management module establishes on the network layer of the gateway the rule that the contents can not be accessed when being default and at the same time configures the filter strategies for parent and child; the user starts to access the internet, and Http message reaches the gateway equipment and is immediately discarded according to the default strategy of the gateway equipment, and then the user is re-orientated onto the network authority configuration page; following the suggestion on the page, the user inputs user name and password; the user management module operates the right authorization, after the authorization is passed, the user management module obtains the information of IP or MAC information of the user through the message, and informs the strategy route module to establish strategy route rule for IP/MAC; at the same time, the green internet management module is informed to make the user strategy take effect.

When the user completes the page authorization and accesses the internet again, Http message reaches the protocol stack, and firstly, the corresponding general connection or green internet connection is selected by the strategy route processing section, and then the message passes through the filter section of the network layer and enters the new process strategy. Herein the message is not discarded again but passes through directly; and at last, the message is sent out through the general Wan connection or green internet Wan connection, and therefore the authorization management flow for user authority is accomplished.

With the above flow, it realizes the user authorization function and solves the internet management problem that multiple users log on network at the same time.

The present invention uses the interaction of the authority party, the service provider party and the gateway equipment of the user to realize the network access control function. In the service, the authority is responsible for transacting the user service authority; the service provider party provides the network access filter service; the user gateway equipment realizes the user management, and therefore the problem that multiple users log on network at the same time can be solved.

It is obvious for those skilled in the art that the present invention may have other advantages and variations. Therefore, the present invention, in a broader sense, is not limited to the specific details and the typical embodiments described in the article. Various amendments may be made to the present invention within the spirit and principle of the present invention specified by the attached claims and the equivalent thereof.

## Claims

1. A method for controlling network access, **characterized in** comprising the following steps:
S102, gateway equipment establishes a general network connection to network management equipment;
S104, the gateway equipment receives from the network management equipment the parameter information of the service type applied by the gateway equipment, and, establishes a network connection which is leading to the network management equipment and matched to the service type applied by the gateway equipment, on the basis of the general network connection and according to the parameter information;
S106, the gateway equipment, based on the user type, controls to select the general network connection or the network connection matched to the service type applied by the gateway equipment, so as to carry out the network access control.

2. The method for controlling network access according to Claim 1, **characterized in that** the step S104 comprises:
S1042, the gateway equipment receives from the network management equipment the parameter information of the service type applied by the gateway equipment;
S1044, the gateway equipment obtains from the parameter information the connection parameter of the network connection matched to the service type applied by the gateway equipment and the network access control parameter; and
S1046, the gateway equipment establishes the network connection matched to the service type applied by the gateway equipment, on the basis of the general network connection and according to the connection parameter.

3. The method for controlling network access according to Claim 2, **characterized in that** the step S106 comprises:
S1062, the gateway equipment identifies the user type depending on the user information;
S1064, the gateway equipment, based on the user type, selects the general network connection or the network connection matched to the service type applied by the gateway equipment;
S1066, the gateway equipment carries out the network access control through the network access control parameter of the network connection matched to the service type applied by the gateway equipment.

4. The method for controlling network access according to Claim 3, **characterized in that** the general network connection and the network connection matched to the service type applied by the gateway equipment both are dial-typed network connection.

5. The method for controlling network access according to Claim 3 or 4, **characterized in that** the gateway equipment identifies the user type just once during the process of network connection.

6. A system for controlling network access, **characterized in** comprising:
a first network connection equipment for establishing a general network connection from gateway equipment to network management equipment;
a second network connection equipment for receiving from the network management equipment the parameter information of the service type applied by the gateway equipment, and establishing a network connection which is leading to the network management equipment and matched to the service type applied by the gateway equipment, on the basis of the general network connection and according to the parameter information;
a network access control equipment for, based on the user type, controlling to select the general network connection or the network connection matched to the service type applied by the gateway equipment, so as to carry out the network access control.

7. The system for controlling network access according to Claim 6, **characterized in that** the second network connection equipment comprises:
an information receiving device for receiving the parameter information of the service type applied by the gateway equipment from the network management equipment;
a parameter obtaining device for obtaining from the parameter information the connection parameter of the network connection matched to the serviced type applied by the gateway equipment and the network access control parameter; and
a network connection device for establishing the network connection matched to the service type applied by the gateway equipment, on the basis of the general network connection and according to the connection parameter.

8. The system for controlling network access according to Claim 7, **characterized in that** the network access control equipment comprises:
a type identification device for identifying the user type depending on the user information;
a connection selection device for selecting the general network connection or the network connection matched to the service type applied by the gateway equipment, based on the user type;
an access control device for carrying out the network access control through the network access control parameter of the network connection matched to the service type applied by the gateway equipment.

9. The system for controlling network access according to Claim 8, **characterized in that** the user type comprises at least one of the following two types: general user and network assess restriction user.

10. The system for controlling network access according to Claim 8 or 9, **characterized in that** the network access control system identifies the user type just once during the process of network connection.
